# DEMANDE DE BREVET EUROPEEN

(11) **EP 1 564 420 A1**
(43) Date de publication de la demande: **17.08.2005**
(21) Numéro de dépôt: 05290297.0
(22) Date de dépôt: 10.02.2005
(51) Int. Cl.: F16B 12/24, F16B 12/46

(54) **Dispositif d'équerrage pour meuble**

(30) Priorité: 10.02.2004 FR 0401314
(71) Demandeur: Bruneau, Bernard, 86300 Valdivienne (FR)
(72) Inventeur: Bruneau, Bernard, 86300 Valdivienne (FR)
(74) Mandataire: Maillet, Alain

(57) **Abrégé**

Dispositif d'équerrage d'une première paroi (102, 106) munie d'une rainure d'encastrement (202) par rapport à une deuxième paroi (110) munie d'une rainure de blocage (204a, 204b) et destinée à être insérée dans la rainure d'encastrement (202), le dispositif étant caractérisé en ce qu'il comprend au moins une plaque de blocage (116, 118) solidaire de la première paroi (102, 106) et apte à subir une translation, par rapport à ladite première paroi (102, 106), entre une première position permettant l'insertion de la deuxième paroi (110) dans la rainure d'encastrement (202) et une deuxième position de blocage qui empêche, par pénétration de la plaque de blocage (116, 118) dans la rainure de blocage (204a, 204b), un mouvement de la deuxième paroi (110) par rapport à la première paroi (102, 106).

## Description

L'invention concerne un dispositif d'équerrage pour meuble. L'invention concerne aussi un meuble équipé d'un tel dispositif d'équerrage. L'invention concerne aussi un procédé d'assemblage d'un tel meuble. Elle trouve application dans le domaine des meubles, en particulier dans le domaine des meubles livrés en kit.

Les meubles sont maintenant souvent livrés en kit et montés sur leur lieu d'implantation par l'acheteur ou par un technicien spécialisé.

D'une façon classique, les meubles sont constitués de panneaux qui s'assemblent les uns aux autres par des systèmes de tenons et de vis qui viennent bloquer les tenons. Les tenons sont fixés sur un premier panneau, leur partie libre est inséré dans des trous réalisés dans un second panneau et par rotation de la vis placées dans le second panneau, un élément solidaire de la vis vient bloquer la partie libre du tenon.

Ces systèmes de vis et tenons sont utilisés pour fixer les parois qui sont d'une épaisseur suffisante pour y introduire un tenon ou un système à vis.

Dans le cas d'une armoire ou d'un rayonnage, les parois épaisses sont les deux parois latérales, le haut et le bas de l'armoire ou du rayonnage.

L'avant de l'armoire est classiquement une porte. L'avant du rayonnage est classiquement laissé libre.

Pour maintenir le fond de l'armoire ou du rayonnage, celui-ci est inséré dans des rainures d'encastrement qui sont réalisées dans les deux parois latérales, dans le haut et dans le bas de l'armoire ou du rayonnage.

Le montage de l'armoire consiste alors en l'assemblage grâce aux tenons et aux vis des deux parois latérales sur le bas de l'armoire pour former un U, de manière à laisser libre l'accès à la rainure d'encastrement et permettre ensuite l'insertion du fond dans cette rainure d'encastrement. Le haut de l'armoire est ensuite mis en place et bloqué par un système de tenons et de vis pour venir réaliser l'armoire.

L'équerrage d'une armoire ou d'un rayonnage montée selon ce procédé n'est pas garanti, même si le système de blocage par tenons et vis est facile à utiliser.

En effet, les branches du U qui sont fixées à la base, par leurs extrémités inférieures ont tendance à s'écarter au niveau de leurs extrémités libres supérieures. L'insertion du fond est certes facilitée par cet écartement, mais l'équerrage de l'armoire n'est pas garanti. En effet les tenons et les trous correspondants des parois latérales et du haut de l'armoire ne sont pas en vis-à-vis, il faut alors pousser sur les branches du U, pour les resserrer et ainsi permettre la mise en place des tenons dans les trous correspondants. Les parois latérales ne sont pas placées d'une manière symétrique à cause de cette opération et le fond a alors tendance à se mettre de travers, ce qui entraîne un défaut d'équerrage de l'armoire. Ce défaut d'équerrage est préjudiciable au montage du reste de l'armoire et l'armoire montée est alors bancale.

Le problème résolu par l'invention est de réaliser un meuble dont l'équerrage est garanti.

Un objet de la présente invention est de proposer dispositif d'équerrage pour meuble qui ne présente pas les inconvénients de l'art antérieur.

A cet effet, est proposé un dispositif d'équerrage d'une première paroi munie d'une rainure d'encastrement par rapport à une deuxième paroi munie d'une rainure de blocage et destinée à être insérée dans la rainure d'encastrement, le dispositif étant caractérisé en ce qu'il comprend au moins une plaque de blocage solidaire de la première paroi et apte à subir une translation, par rapport à ladite première paroi, entre une première position permettant l'insertion de la deuxième paroi dans la rainure d'encastrement et une deuxième position de blocage qui empêche, par pénétration de la plaque de blocage dans la rainure de blocage, un mouvement de la deuxième paroi par rapport à la première paroi.

Avantageusement, la plaque de blocage comprend un premier trou et la translation est réalisée par la coopération du trou avec une vis solidaire de la première paroi.

Avantageusement, la plaque de blocage comprend un deuxième trou d'insertion d'une seconde vis.

L'invention propose aussi un meuble comprenant une base munie d'une rainure d'encastrement et un fond qui s'insère dans la rainure d'encastrement, caractérisé en ce qu'il comprend au moins un dispositif d'équerrage d'un premier type, muni d'une plaque de blocage, destinée à immobiliser la base par rapport au fond selon l'une des variantes précédentes.

Avantageusement, au moins un dispositif d'équerrage du premier type est placé au voisinage de chacune des extrémités latérales du fond.

Avantageusement, le fond comprend une première rainure de blocage, en ce que la face inférieure de la plaque de blocage du dispositif d'équerrage du premier type vient en contact avec la face inférieure de la première rainure de blocage, et en ce que le bord inférieur du/fond vient en contact avec le fond de la rainure d'encastrement de la base.

Avantageusement, au moins une des faces latérales extérieures de la plaque de blocage de chaque dispositif d'équerrage du premier type vient en contact avec l'une des faces latérales extérieures de chaque première rainure de blocage.

Avantageusement, le meuble comprend en outre au moins une paroi latérale munie d'une rainure d'encastrement dans laquelle le fond s'insère et il comprend au moins un dispositif d'équerrage du deuxième type, muni d'une autre plaque de blocage, destinée à immobiliser la paroi latérale par rapport au fond.

Avantageusement, au moins un dispositif d'équerrage du deuxième type est placé entre le milieu et l'extrémité supérieure des parois latérales.

Avantageusement, le fond comprend une deuxième rainure de blocage, la face extérieure de la plaque de blocage du dispositif d'équerrage du deuxième type vient en contact avec la face extérieure de la deuxième rainure de blocage, et le bord latéral du fond vient en contact avec le fond de la rainure d'encastrement de la paroi latérale.

Selon une première variante, le meuble est une armoire.

Selon une deuxième variante, le meuble est un rayonnage.

L'invention propose aussi un procédé d'assemblage d'un meuble selon l'une des variantes précédentes, caractérisé en ce qu'il comprend:
- une étape d'insertion du fond dans la rainure d'encastrement de la base;
- une étape de passage du dispositif d'équerrage du premier type de la première position à la deuxième position;
- une étape de blocage du dispositif d'équerrage du premier type dans la deuxième position;
- une étape de assemblage des parois latérales sur la base;
- une étape de passage du dispositif d'équerrage du deuxième type de la première position à la deuxième position;
- une étape de blocage du dispositif d'équerrage du deuxième type dans la deuxième position.

L'invention propose aussi un procédé d'assemblage d'un meuble selon l'une des variantes précédentes, caractérisé en ce qu'il comprend:
- une étape de fixation des parois latérales sur la base;
- une étape d'insertion du fond dans les rainures d'encastrement des parois latérales et de la base;
- une étape de passage du dispositif d'équerrage du premier type de la base par rapport au fond de la première position à la deuxième position;
- une étape de blocage du dispositif d'équerrage du premier type dans la deuxième position;
- une étape de passage du dispositif d'équerrage du deuxième type des parois latérales par rapport au fond de la première position à la deuxième position;
- une étape de blocage du dispositif d'équerrage du deuxième type dans la deuxième position.

Avantageusement, le procédé comprend en outre une étape de mise en place d'un haut.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'une armoire munie d'un dispositif d'équerrage selon l'invention;
la Fig. 2 représente une vue de dessus, dé l'armoire de la Fig. 1, sans le haut de l'armoire;
la Fig. 3 est une vue partielle de la coupe selon la ligne III-III de la Fig. 2.

La description qui suit va être basée sur une armoire, mais l'invention peut s'appliquer à un rayonnage ou à tous meubles dont on veut garantir l'équerrage lors de l'assemblage.

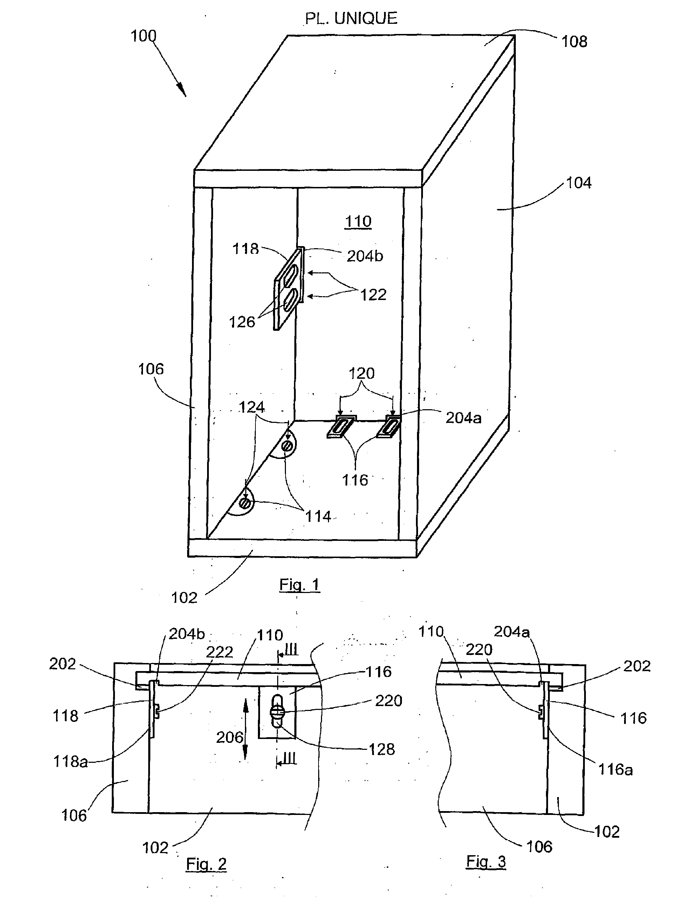

La Fig. 1 représente une armoire 100 comprenant une paroi inférieure 102 appelée base et qui repose sur le sol, deux parois latérales 104 et 106, une paroi supérieure 108 appelée haut et une paroi arrière 110 appelée fond.

Le fond 110 est sensiblement orthogonal aux parois latérales 104 et 106 et à la base 102.

Les parois latérales 104, 106, le haut 108 et la base 102 sont fixés les uns aux autres par des systèmes de tenons et vis. Les tenons ne sont pas vus. Les vis qui permettent par rotation de venir bloquer les parois sur les tenons correspondants sont référencées 114. Pour venir fixer les tenons, la personne qui assemble l'armoire vient positionner son tournevis selon les flèches 124 et exerce une rotation sur les vis 114.

Dans chaque paroi latérale 104, 106, dans le haut 108 et la base 102 est réalisée une rainure d'encastrement 202 (Fig. 2 et Fig. 3).

Lé fond 110 est inséré dans les rainures d'encastrement 202 pour être maintenu en position. Le jeu entre le fond 110 et la rainure d'encastrement 202 est défini de manière à permettre le montage du fond 110 dans la rainure d'encastrement 202.

L'armoire 100 comprend aussi au moins une plaque de blocage 116 d'un dispositif d'équerrage d'un premier type et au moins une plaque de blocage 118 d'un deuxième type de dispositif d'équerrage. Elles sont de préférence en métal pour pouvoir résister aux efforts subis.

On appellera par la suite la première plaque de blocage 116, la plaque de blocage d'un dispositif d'équerrage du premier type.

On appellera par la suite la deuxième plaque de blocage 118, la plaque de blocage d'un dispositif d'équerrage du deuxième type.

Un dispositif d'équerrage est constitué en partie par une plaque de blocage et le mouvement d'une plaque de blocage d'une première position à une deuxième position signifie le passage du dispositif d'équerrage d'une première position à une deuxième position.

La première plaque de blocage 116 est percée d'un trou 128 qui permet le passage d'une vis 220. La vis 220 se visse sur la base 102 en passant à travers le trou 128 de la première plaque de blocage 116. La vis 220 se visse et se dévisse avec un tournevis représenté par les flèches 120.

Le trou 128 a une forme qui permet le mouvement de la plaque de blocage 116 selon une direction représentée par la flèche 206 lorsque la vis 120 n'est pas entièrement vissée. Lorsque la vis 120 est serrée, la première plaque de blocage 116 est bloquée. La direction représentée par la flèche 206 est sensiblement orthogonale au fond 110.

Le trou 128 a ici une forme oblongue dont la largeur est inférieure au diamètre de la tête de la vis 220, mais supérieure au diamètre du filetage de la vis 220.

D'une manière similaire, une deuxième plaque de blocage 118 est fixée sur chacune des parois latérales 104, 106 par l'intermédiaire de vis 222, qui se vissent et se dévissent avec un tournevis représenté par les flèches 122. Les deuxièmes plaques de blocage 118 sont percées de trous 126 qui permettent la mise en place des vis 222 et permettent le déplacement des deuxièmes plaques de blocage 118 selon la direction de la flèche 206.

Les trous 126, 128 des plaques de blocages 116, 118 permettent le déplacement des plaques de blocage 116, 118 entre une première position qui permet l'insertion du fond 110 dans la rainure d'encastrement 202 de la base 102 et des parois latérales 104, 106 et une deuxième position qui bloque le fond 110 par rapport à la base 102 ou par rapport aux parois latérales 104, 106.

Le mouvement des plaques de blocages 116, 118 est une translation.

En vis-à-vis de chaque plaque de blocage 116, 118, le fond 110 est muni d'une première rainure de blocage 204a et d'une deuxième rainure de blocage 204b respectivement dans lesquelles viennent s'insérer les plaques de blocage 116, 118 lorsqu'elles sont déplacées selon la flèche 206.

Dans la première position, les plaques de blocage 116, 118 ne sont pas insérées dans les rainures de blocage 204a, 204b.

Dans la deuxième position, pour garantir.l'équerrage de l'armoire 100 au cours de l'assemblage, les plaques de blocage 116, 118 sont insérées dans les rainures de blocage 204a et 204b correspondantes.

Pour garantir l'équerrage entre la base 102 et le fond 120, on utilise la première plaque de blocage 116 qui pénètre dans la première rainure de blocage 204a. Pour améliorer le résultat, il est préférable de répartir plusieurs premières plaques de blocage 116 le long du fond 110. Préférentiellement, on placera deux premières plaques de blocage 116, chacune au voisinage d'une des extrémités latérales du fond 110. La mise en place des premières plaques de blocage 116 empêche le fond 110 de se mettre de travers car il est maintenu contre la base 102.

Pour garantir l'équerrage entre les parois latérales 104, 106 et le fond, on utilise les deuxièmes plaques de blocage 118 qui pénètrent dans les deuxièmes rainures de blocage 204b. Préférentiellement, les plaques de blocage 118 sont placées entre le milieu et l'extrémité supérieure des parois latérales 104, 106 pour éloigner le plus possible les points de fixation, que sont les dispositifs à vis et tenons, des plaques de blocage 118. En effet plus ces points seront éloignés, plus l'équerrage sera amélioré.

Les efforts subis par les deuxièmes plaques de blocage 118 sont plus importants que ceux subis par les premières plaques de blocage 116, à cause du poids plus important des parois latérales 104, 106. Les deuxièmes plaques de blocage 118 sont donc munies d'un deuxième trou 126 pour permettre la mise en place d'une deuxième vis 222.

D'une manière générale, le dispositif d'équerrage d'une première paroi 102, 104, 106 munie d'une rainure d'encastrement 202 par rapport à une deuxième paroi 110 qui s'insère dans la rainure d'encastrement 202, comprend une plaque de blocage 116, 118 solidaire de la première paroi 102, 104, 106 et apte à subie un déplacement entre une première position permettant l'insertion de la deuxième paroi 110 dans la rainure d'encastrement 202 de la première paroi 102, 104, 106 et une deuxième position de blocage qui empêche un mouvement de la deuxième paroi 110 par rapport à la première paroi 102, 104, 106.

Les premières plaques de blocage 116 se rapportent à un dispositif d'équerrage d'un premier type.

Les deuxièmes plaques de blocage 118 se rapportent à un dispositif d'équerrage d'un deuxième type.

Le procédé de montage de l'armoire va maintenant être décrit.

Le montage de l'armoire comprend une étape de fixation des parois latérales 104, 106 sur 1a base 102 grâce aux systèmes de vis et tenons 114. On obtient alors un ensemble en forme de U.

Les plaques de blocage 116, 118 sont bloquées par les vis 220, 222 respectivement dans la première position qui autorise le montage.

Le fond 110 est alors introduit dans les rainures d'encastrement 202 des parois latérales 104, 106, jusqu'à pénétrer dans la rainure d'encastrement 202 de la base 102.

Les premières plaques de blocage 116 sont alors insérées dans les premières rainures de blocage 204a du fond 110 et bloquées par les vis 220 dans la deuxième position.

Les parois latérales 104, 106 sont alors positionnées pour permettre l'insertion des deuxièmes plaques de blocage 118 dans les deuxièmes rainures de blocage 204b.

Le fait que les premières plaques de blocage 116 sont bloquées empêche le déplacement latéral ou en hauteur du fond 110 par rapport à la base 102 lors du positionnement des parois latérales 104, 106.

La mise en place des deuxièmes plaques de blocage 118 dans les deuxièmes rainures de blocage 204b et leur blocage par les vis 222 dans la deuxième position, garantissent l'équerrage de l'ensemble avant la mise en place du haut 108 de l'armoire. Le haut 108 de l'armoire est alors fixé par des systèmes de vis et tenons.

Les deuxièmes plaques de blocage 118 permettent le maintien des parois latérales 104, 106 dans la position où les tenons et les trous correspondants sont en vis-à-vis.

Le procédé de montage décrit peut être différent, en particulier il est possible de monter le fond 110 sur la base 102 et de le bloquer grâce aux premières plaques de blocage 116 avant d'assembler les parois latérales 104, 106 sur la base 102 et de les bloquer avec les deuxièmes plaques de blocage 118.

Les premières rainures de blocage 204a sont réalisées de manière à garantir le positionnement du fond 110 tout en empêchant son déplacement latéral et son déplacement vers le haut. En d'autres termes, les dimensions des premières rainures de blocage 204a sont telles que les jeux fonctionnels entre les premières rainures de blocage 204a et les premières plaques de blocage 116 empêchent les déplacements du fond 110.

Une remarque équivalente peut être faite en ce qui concerne les deuxièmes rainures de blocage 204b et les deuxièmes plaques de blocage 118.

En particulier, pour empêcher le soulèvement du fond 110, la face inférieure 116a de la première plaque de blocage 116 vient en contact avec la face inférieure de la première rainure de blocage 204a, alors que le bord inférieur du fond 110 vient en contact avec le fond de la rainure d'encastrement 202.

Pour empêcher le déplacement latéral du fond 110 par rapport à la base 102, les faces latérales de la première plaque de blocage 116 vient en contact avec les faces latérales de la première rainure de blocage 204a.

Dans le cas où deux premières plaques de blocage 116 ont été mises en place, il suffit que soit les faces latérales extérieures de chaque première plaque de blocage 116 viennent en contact avec les faces latérales extérieures de chaque première rainure de blocage 204a correspondante, soit les faces latérales intérieures de chaque première plaque de blocage 116 viennent en contact avec les faces latérales intérieures de chaque première rainure de blocage 204a correspondante.

De la même manière, pour empêcher le déplacement latéral des parois latérales 104, 106, la face extérieure 118a des deuxièmes plaques de blocage 118 vient en contact avec les faces extérieures des deuxièmes rainures de blocage 204b, alors que le bord latéral du fond 110 vient en contact avec le fond de la rainure d'encastrement 202.

Ces contacts sont réalisés dans la limite des jeux fonctionnels qui autorisent le montage de l'armoire et le déplacement des plaques de blocage 116, 118.

Les contacts entre les faces latérales des premières plaques de blocage 116 et les faces latérales des premières rainures de blocage 204a, ainsi que les contacts entre les faces supérieures et inférieures des deuxièmes plaques de blocage 118 et les faces supérieures et inférieures des deuxièmes rainures de blocage 204b ne sont pas nécessairement des contacts plans.

En effet, les rainures de blocage 204a, 204b peuvent être réalisées par une fraise circulaire, les rainures de blocage 204a, 204b sont alors des portions de cylindre dont les axes sont sensiblement parallèles au fond 110. L'axe est sensiblement vertical pour les premières rainures de blocage 204a, et il est sensiblement horizontal pour les deuxièmes rainures de blocage 204b.

Les contacts se font alors entre les arêtes des plaques de blocage 116, 118 et les bords des portions de cylindre, les contacts sont alors des contacts linéaires.

Pour renforcer les contacts, les faces des plaques de blocage 116, 118 en vis-à-vis des portions de cylindre peuvent avoir une forme arrondie pour épouser au mieux la forme des portions de cylindre.

Bien entendu, la présente invention n'est pas limitée aux exemples et modes de réalisation décrits et représentés, mais elle est susceptible de nombreuses variantes accessibles à l'homme de l'art.

Par exemple, on a décrit un meuble avec au moins une première plaque de blocage 116 et au moins une deuxième plaque de blocage 118, mais il est possible de n'utiliser que l'une de ces plaques de blocage selon la configuration du meuble.

Par exemple, les plaques de blocage peuvent être des plaques qui pivotent entre la première position et la deuxième position. Les plaques de blocage pourront être des portions de disque dont la rotation sera limitée par la mise en butée d'un rayon contre les rainures de blocage. Pour empêcher le déplacement latéral du fond, les premières plaques de blocage seront montées symétriquement par rapport au plan vertical médian de l'armoire. Le mouvement des plaques de blocages 116, 118 est alors une rotation.

Mais le mouvement peut être une combinaison de translations et de rotations.

Les plaques de blocage sont placées sur la surface des parois latérales, mais elles peuvent être mise en place dans des rainures réalisées sur les parois latérales, pour que les plaques de blocage soient affleurantes à ces surfaces et améliorer ainsi l'esthétique et la sécurité en évitant que les manipulateur se blessent sur les arêtes des plaques de blocage.

Les plaques de blocage peuvent être placées dans des évidements réalisés à l'intérieur des parois latérales Les plaques sont alors complètement cachées, améliorant encore l'esthétique et la sécurité. Seuls les têtes des vis 220, 222 sont visibles.

Les plaques de blocage sont arrêtées par des vis, mais on peut envisager des systèmes de blocage différents. Il suffit que le système de blocage permette le blocage des plaques de blocage dans la première position et la deuxième position.

## Revendications

1. Dispositif d'équerrage d'une première paroi munie d'une rainure d'encastrement par rapport à une deuxième paroi munie d'une rainure de blocage et destinée à être insérée dans la rainure d'encastrement, le dispositif étant **caractérisé en ce qu'**il comprend au moins une plaque de blocage solidaire de la première paroi et apte à subir une translation, par rapport à ladite première paroi, entre une première position permettant l'insertion de la deuxième paroi dans la rainure d'encastrement et une deuxième position de blocage qui empêche, par pénétration de la plaque de blocage dans la rainure de blocage, un mouvement de la deuxième paroi par rapport à la première paroi.

2. Dispositif selon la revendication 1, **caractérisé en ce que** la plaque de blocage comprend un premier trou et **en ce que** la translation est réalisée par la coopération du trou avec une vis solidaire de la première paroi.

3. Dispositif selon la revendication 2, **caractérisé en ce que** la plaque de blocage comprend un deuxième trou d'insertion d'une seconde vis.

4. Meuble comprenant une base munie d'une rainure d'encastrement et un fond qui s'insère dans la rainure d'encastrement, **caractérisé en ce qu'**il comprend au moins un dispositif d'équerrage d'un premier type, muni d'une plaque de blocage, destinée à immobiliser la base par rapport au fond selon l'une des revendications précédentes.

5. Meuble selon la revendication 4, **caractérisé en ce qu'**au moins un dispositif d'équerrage du premier type est placé au voisinage de chacune des extrémités latérales du fond.

6. Meuble selon l'une des revendications 4 à 5, **caractérisé en ce que** le fond comprend une première rainure de blocage, **en ce que** la face inférieure de la plaque de blocage du dispositif d'équerrage du premier type vient en contact avec la face inférieure de la première rainure de blocage, et **en ce que** le bord inférieur du fond vient en contact avec le fond de la rainure d'encastrement de la base.

7. Meuble selon l'une des revendications 4 à 6, **caractérisé en ce qu'**au moins une des faces latérales extérieures de la plaque de blocage de chaque dispositif d'équerrage du premier type vient en contact avec l'une des faces latérales extérieures de chaque première rainure de blocage.

8. Meuble selon l'une des revendications 4 à 7, **caractérisé en ce qu'**il comprend en outre au moins une paroi latérale munie d'une rainure d'encastrement dans laquelle le fond s'insère et **en ce qu'**il comprend au moins un dispositif d'équerrage du deuxième type, muni d'une autre plaque de blocage, destinée à immobiliser la paroi latérale par rapport au fond.

9. Meuble selon la revendication 8, **caractérisé en ce qu'**au moins un dispositif d'équerrage du deuxième type est placé entre le milieu et l'extrémité supérieure des parois latérales.

10. Meuble selon l'une des revendications 8 à 9, **caractérisé en ce que** le fond comprend une deuxième rainure de blocage, **en ce que** la face extérieure de la plaque de blocage du dispositif d'équerrage du deuxième type vient en contact avec la face extérieure de la deuxième rainure de blocage, et **en ce que** le bord latéral du fond vient en contact avec le fond de la rainure d'encastrement de la paroi latérale.

11. Meuble selon l'une des revendications 4 à 12, **caractérisé en ce que** le meuble est une armoire.

12. Meuble selon l'une des revendications 4 à 12, **caractérisé en ce que** le meuble est un rayonnage.

13. Procédé d'assemblage d'un meuble selon l'une des revendications 4 à 12, **caractérisé en ce qu'**il comprend:
- une étape d'insertion du fond dans la rainure d'encastrement de la base;
- une étape de passage du dispositif d'équerrage du premier type de la première position à la deuxième position;
- une étape de blocage du dispositif d'équerrage du premier type dans la deuxième position;
- une étape de assemblage des parois latérales sur la base;
- une étape de passage du dispositif d'équerrage du deuxième type de la première position à la deuxième position;
- une étape de blocage du dispositif d'équerrage du deuxième type dans la deuxième position.

14. Procédé d'assemblage d'un meuble selon l'une des revendications 4 à 12, **caractérisé en ce qu'**il comprend:
- une étape de fixation des parois latérales sur la base;
- une étape d'insertion du fond dans les rainures d'encastrement des parois latérales et de la base;
- une étape de passage du dispositif d'équerrage du premier type de la base par rapport au fond de la première position à la deuxième position;
- une étape de blocage du dispositif d'équerrage du premier type dans la deuxième position;
- une étape de passage du dispositif d'equerrage du deuxième type des parois latérales par rapport au fond de la première position à la deuxième position;
- une étape de blocage du dispositif d'équerrage du deuxième type dans la deuxième position.

15. Procédé selon l'une des revendications 13 à 14, **caractérisé en ce qu'**il comprend en outre une étape de mise en place d'un haut.
